# EUROPÄISCHE PATENTSCHRIFT

(11) **EP 2 814 767 B1**
(45) Veröffentlichungstag und Bekanntmachung des Hinweises auf die Patenterteilung: **24.08.2016**
(21) Anmeldenummer: 14708785.2
(22) Anmeldetag: 30.01.2014
(51) Int. Cl.: B65G 57/00, B65G 9/00, B65G 49/06, B65G 59/00

(54) **VORRICHTUNG ZUM STAPELN UND ENTSTAPELN VON PLATTENFÖRMIGEN GEGENSTÄNDEN**
DEVICE FOR STACKING AND UNSTACKING PANEL-SHAPED OBJECTS
APPAREIL POUR EMPILER ET DÉSEMPILER DES PLAQUES PLANES.

(30) Priorität: 30.01.2013 AT 662013
(43) Veröffentlichungstag der Anmeldung: 24.12.2014
(73) Patentinhaber: LISEC Austria GmbH, 3353 Seitenstetten (AT)
(72) Erfinder: KRONSTEINER, Alexander, 3372 Blindenmarkt (AT); ENZENBRUNNER, Adrian, 4400 Steyr (AT); ENDLICHER, Hannes, 3390 Melk (AT)
(74) Vertreter: Beer & Partner Patentanwälte KG
(86) Internationale Anmeldenummer: PCT/AT2014/000019
(87) Internationale Veröffentlichungsnummer: WO 2014/117192

(56) Entgegenhaltungen:
- DE-A1- 19 544 490
- DE-A1- 19 636 470
- DE-U1-202012 010 085
- FR-A1- 2 525 196
- US-A- 5 609 377

## Beschreibung

Die Erfindung betrifft eine Vorrichtung mit den Merkmalen des einleitenden Teils des unabhängigen Anspruchs 1.

Vorrichtungen zum Stapeln und Entstapeln sind bekannt, in welchem Zusammenhang auf die FR 2 525 196 A, die WO 2012/037582 A oder die EP 0 675 060 B1 verwiesen werden kann.

Plattenförmige Gegenstände, insbesondere Glasscheiben, werden in Lagern (Glaslager), beispielsweise in Stapeln auf einem Lagerbock, bereit gehalten.

Auf den Lagerböcken stehen die plattenförmigen Gegenstände (Glasscheiben) zur Lotrechten um wenige Grad (beispielsweise 5°) geneigt, sodass sie sicher am Lagerbock lehnen.

Für das Abladen ("Stapeln") und das Entnehmen ("Entstapeln") von plattenförmigen Gegenständen sind mit Saugköpfen bestückte Balken ("Saugerbalken") mit einer Länge von beispielsweise 6 m vorgesehen. Die Saugköpfe werden an den oberen Rand eines plattenförmigen Gegenstandes (Glasscheibe) angelegt, um den jeweils vordersten Gegenstand vom Stapel abzuheben und einer weiteren Be- oder Verarbeitung zuzuführen. Beispielsweise werden Glasscheiben, die von einem Lagerbock abgenommen ("entstapelt") worden sind, einem Glasschneidetisch zugeführt.

Für das Erfassen/Entnehmen/Abstellen plattenförmiger Gegenstände sind auch kammartige Vorrichtungen ("Kämme") bekannt, auf deren Zinken mehrere, meist drei, Saugköpfe angeordnet sind, sodass die Glasscheiben flächig erfasst werden können. Die Kammform ist gewählt, damit verschiedene, mit Vakuumsaugern ausgestattete Vorrichtungen zum Fördern, Lagern, Transportieren einander Glasscheiben übergeben können, ohne dass diese von beiden Seiten angesaugt werden müssen - was etwa für Beschichtungen schädlich wäre.

Saugerbalken, die nicht in voneinander unabhängige Segmente unterteilt sind, sind aus der FR 2 525 196 A bekannt.

In der DE 20 2012 010 085 U1 ist eine Vorrichtung zum Versetzen von Platten, insbesondere Glasplatten, geoffenbart, wobei in Absatz [0009] erwähnt ist, dass Glasplatten "unterschiedlichster" Formate, Dicke oder Qualitätsstufen auf doppelseitig beladbaren Stapelgestellen (A-Böcke) gestapelt werden können sollen.

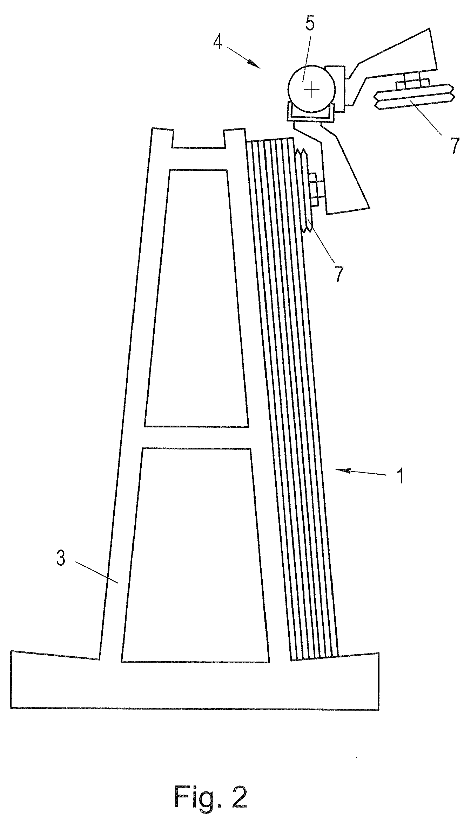

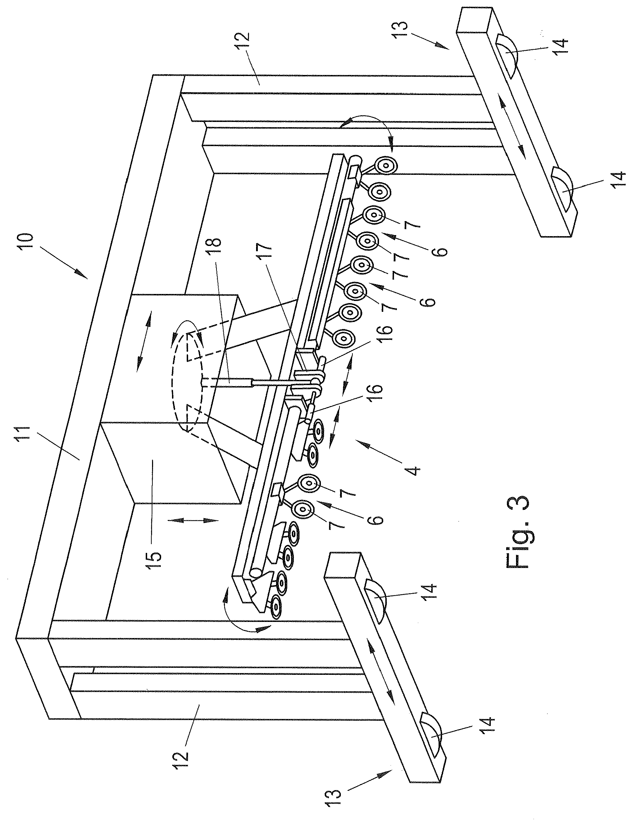

An der Greifvorrichtung der Vorrichtung gemäß der DE 20 2012 010 085 U1 sind zwei Greiferfinger mit Haltemitteln vorgesehen. Die Greiferfinger sind, wie beispielsweise schon die Fig. 2 und 3 zeigen, an einander gegenüberliegenden Querrändern des Greifers angeordnet und können (Fig. 3) unabhängig voneinander betätigt werden.

Auch ist der DE 20 2012 010 085 U1 zu entnehmen, dass an einem Lagerbock zwei Stapel gebildet werden, wobei diese Stapel aber einander gegenüberliegen.

An keiner Stelle der DE 20 2012 010 085 U1 ist ausdrücklich erwähnt, dass die auf einem Lagerbock gebildeten Stapel voneinander verschieden sein sollen oder können.

Die DE 196 36 470 A1 zeigt beispielsweise in Fig. 5 eine Vorrichtung zum Handhaben von Glasscheiben, wobei Saugaggregate mit aufeinander gegenüberliegenden Seiten angeordneten Saugköpfen vorgesehen sind, mit welchen Glasplatten von einander gegenüberliegend angeordneten Lagerböcken abgenommen und an eine Fördervorrichtung übergeben werden können sollen.

In der DE 196 36 470 A1 ist auch erwähnt, dass Scheiben auf Lagerböcke eingestellt werden können.

Auch die DE 196 36 470 A1 zeigt, formal betrachtet, zwei voneinander unabhängig betätigbare Greifereinrichtungen, nämlich die einander gegenüberliegenden Felder mit Saugköpfen. Problematisch ist es, wenn am Lagerbock unterschiedliche Glassorten, beispielsweise Stapel aus Glasscheiben mit unterschiedlicher Breite oder Stapel derselben oder unterschiedlicher Glassorten mit unterschiedlicher Stärke (Dicke) der Stapel stehen. Daher war es bisher zwingend erforderlich, dass gleichzeitig Glasscheiben von jedem Stapel entnommen werden. Nur so konnte verhindert werden, dass unterschiedliche Stapeldicken entstehen und dann das Arbeiten mit über die Breite der Lagerböcke durchgehend ausgebildeten Greifeinrichtungen, auch wenn sie als Saugerbalken ausgebildet sind, nicht mehr möglich wird.

Der Erfindung liegt die Aufgabe zugrunde, eine Vorrichtung der eingangs genannten Gattung vorzuschlagen, bei welcher die zuvor beschriebene Problematik nicht auftritt.

Gelöst wird diese Aufgabe erfindungsgemäß mit einer Vorrichtung, bei der die Merkmale des unabhängigen, auf die Vorrichtung gerichteten Anspruches verwirklicht sind.

Bevorzugte und vorteilhafte Ausgestaltungen der Erfindung sind Gegenstand der Unteransprüche.

Bei der erfindungsgemäßen Vorrichtung ist vorgesehen, dass auf einem Lagerbock wenigstens zwei Stapel gebildet werden, wobei die Stapel voneinander unterschiedlich sind.

Bei der erfindungsgemäßen Vorrichtung kann vorgesehen sein, dass Stapel aus voneinander unterschiedlichen plattenförmigen Gegenständen gebildet werden.

In einer möglichen Ausführungsform der Erfindung kann vorgesehen sein, dass wenigstens zwei Stapel mit voneinander unterschiedlicher Dicke gebildet werden, indem wenigstens ein plattenförmiger Gegenstand auf wenigstens einen der Stapel eingestellt wird oder wenigstens ein plattenförmiger Gegenstand aus wenigstens einem der Stapel entnommen wird.

Die erfindungsgemäße Vorrichtung kann sich in einer Ausführungsform dadurch auszeichnen, dass als Greifer der Greifeinrichtung Saugköpfe, denen eine Quelle für Unterdruck zugeordnet ist, vorgesehen sind.

Bei der erfindungsgemäßen Vorrichtung sind die Greifer der Greifeinrichtung voneinander unabhängig in ihre und aus ihrer Gegenständen zugeordneten Wirklage verstellbar. Dabei ist vorgesehen, dass die Greifer der Greifeinrichtung durch Schwenkbewegungen oder lineare Bewegungen, insbesondere Heben/Senken, in ihre und aus ihrer Wirklage verstellbar sind.

Die erfindungsgemäße Vorrichtung kann sich in einer Ausführungsform dadurch auszeichnen, dass die Greifer der Greifeinrichtung an einem gemeinsamen Träger angeordnet sind.

Bei der erfindungsgemäßen Vorrichtung weist die Greifeinrichtung nebeneinander wenigstens zwei Gruppen mit je wenigstens einem Greifer, insbesondere je wenigstens zwei Greifern, auf.

Bei der erfindungsgemäßen Vorrichtung sind die Greifer voneinander unabhängig in die und aus ihrer Wirklage verstellbar, insbesondere schwenkbar.

Die erfindungsgemäße Vorrichtung kann sich in einer Ausführungsform dadurch auszeichnen, dass die Verbindung zwischen in ihre Bereitschaftslage verstellten Saugköpfen mit der Quelle für Unterdruck unterbrochen ist.

Die erfindungsgemäße Vorrichtung kann sich in einer Ausführungsform dadurch auszeichnen, dass in ihrer Wirklage verstellte Saugköpfe mit der Quelle für Unterdruck verbunden ist.

Die erfindungsgemäße Vorrichtung kann sich in einer Ausführungsform dadurch auszeichnen, dass dem Träger eine Einrichtung zum Bewegen im Raum, beispielsweise eine Einrichtung nach Art eines Portalkranes, zugeordnet ist.

Die erfindungsgemäße Vorrichtung kann sich in einer Ausführungsform dadurch auszeichnen, dass aus ihrer Wirklage verstellte Greifer der Greifeinrichtung oberhalb von Stapeln angeordnet sind.

Mit der Erfindung ist die Möglichkeit geschaffen, zwei oder mehr als zwei unterschiedliche Stapel, beispielsweise Stapel aus verschiedenen Arten von Gegenständen, z.B. Glassorten, auf einen (einzigen) Lagerbock einzustellen und Gegenstände aus nur einem der Stapel zu entnehmen und abzutransportieren.

Die Erfindung macht es weiters möglich, plattenförmige Gegenstände zu unterschiedlichen Stapeln zu stapeln.

Dies ist möglich, da die erfindungsgemäße Vorrichtung eine Greifeinrichtung mit wenigstens zwei voneinander unabhängig wirkenden Greifern aufweist.

Beispielsweise umfassen die Greifeinrichtungen als Greifer Saugköpfe, die mit wenigstens einer Unterdruckquelle verbunden sind, sodass sie durch Unterdruck an einem plattenförmigen Gegenstand (Glasscheibe) angelegt werden können, um diesen zu erfassen und entweder von einem Stapel, der auf einem Lagerbock lehnt, zu entnehmen oder auf einen Lagerbock abzustellen.

In einer anderen Ausführungsform umfassen die Greifeinrichtungen als Greifer Transportgabeln, die in wenigstens zwei Gruppen zu je wenigstens zwei Transportgabeln zusammengefasst sind.

Die Transportgabeln besitzen jeweils bevorzugt wenigstens zwei, beispieslweise im wesentlichen L-förmige Trageelemente. Die zu stapelnden/entstapelnden Gegenstände stehen einerseits auf den unteren, kürzeren (im wesentlichen horizontalen) Schenkeln der Tragelemente, werden von diesen also von unten her abgestützt, und lehnen anderseits an den längeren (im wesentlichen lotrechten) Schenkeln der Tragelemente.

In einer Ausführungsform sind die Transportgabeln an horizontalen Trägern, gegebenenfalls verschwenkbar so angebracht, dass sie von den Trägern nach unten ragen.

An den im wesentlichen lotrechten Schenkeln der Tragelemente können Saugköpfe angeordnet sein, um von den Greifern gehaltene Gegenstände während des Transportes zu sichern.

Auch bei Greifern in Form von Transportgabeln sind nebeneinander wenigstens zwei voneinander unabhängig arbeitende Gruppen aus je wenigstens zwei Tragelementen vorgesehen. Dies erlaubt es, dass auf/von zwei nebeneinander angeordneten Stapeln voneinander unabhängig Gegenstände aufgestapelt/abgestapelt werden können, ohne dass der dickere Stapel der Greifeinrichtung im Weg ist. Dies insbesondere, wenn wie in einer möglichen Ausführungsform vorgesehen, die L-förmigen Tragelemente in ihre/aus ihrer Wirkstellung weggeschwenkt werden können.

Dieser vorteilhafte Effekt ist auch für die Ausführungsform der Greifeinrichtung mit den als ein- und ausschwenkbare Saugköpfe ausgebildeten Greifern oder bei der Ausführungsform mit Tragelementen, die je nach Bedarf abgenommen und wieder eingesetzt werden können, gegeben.

In einer möglichen Ausführungsform der Erfindung ist vorgesehen, dass als Greifer für die Greifeinrichtung Transportgabeln vorgesehen sind.

In einer möglichen Ausführungsform der Erfindung ist vorgesehen, dass jede Transportgabel wenigstens zwei im Wesentlichen L-förmige Tragelemente aufweist.

In einer möglichen Ausführungsform der Erfindung ist vorgesehen, dass an den Transportgabeln, insbesondere deren im Wesentlichen lotrechten Schenkeln, Saufköpfe vorgesehen sind.

In einer möglichen Ausführungsform der Erfindung ist vorgesehen, dass die Tragelemente der Transportgabeln an Trägern, vorzugsweise von diesen nach unten abstehend, angeordnet sind.

In einer möglichen Ausführungsform der Erfindung ist vorgesehen, dass die Träger von wenigstens zwei Transportgabeln lösbar an einem Hauptträger befestigt sind.

In einer möglichen Ausführungsform der Erfindung ist vorgesehen, dass die Transportgabeln aus ihrer Wirkstellung und in ihre Wirklage verschwenkbar sind.

In einer möglichen Ausführungsform der Erfindung ist vorgesehen, dass die Tragelemente der Transportgabeln in deren Wirklage im Wesentlichen lotrecht ausgebildet sind.

In einer möglichen Ausführungsform der Erfindung ist vorgesehen, dass die im Wesentlichen lotrechten Schenkel der Tragelemente längenveränderlich ausgebildet sind.

In einer möglichen Ausführungsform der Erfindung ist vorgesehen, dass Greifer mit Saugköpfen mit Greifern mit Transportgabeln kombiniert sind.

In einer möglichen Ausführungsform der Erfindung ist vorgesehen, dass Saugköpfe und Transportgabeln voneinander unabhängig in deren und aus deren Wirklage verschwenkbar sind.

Im Rahmen der Erfindung ist auch in Betracht gezogen, Greifer in Form von Transportgabeln mit Greifeinrichtungen zu kombinieren, die als Saugköpfe ausgebildete Greifer aufweisen. Dies erlaubt es auch mit Greifern in Form von Saugköpfen schwere Gegenstände sicher zu transportieren.

Erfindungsgemäß ist die Möglichkeit gegeben, jeweils nur die Greifer der Greifeinrichtung zu aktivieren, die einem Stapel von mindestens zwei Stapeln auf einem Lagerbock zugeordnet sind, wobei die übrigen Greifer der Greifeinrichtung unwirksam bleiben.

Wenn die Greifer der erfindungsgemäßen Greifeinrichtung Saugköpfe sind, besteht die Möglichkeit, nur den Saugkopf (oder zwei oder mehr als zwei Saugköpfe) in seine Wirklage zu bewegen, beispielsweise zu schwenken, der benötigt wird, wogegen nicht benötigte Saugköpfe, die im Bereich eines Stapels angeordnet sind, aus dem kein plattenförmiger Gegenstand (Glasscheibe) zu entnehmen ist, in ihrer Bereitschaftslage bleiben können.

Mit der Erfindung ist es in vorteilhafter Weise möglich, auf einem einzigen Lagerbock zwei oder mehr als zwei verschiedene Glassorten oder Glasscheiben in Stapeln mit unterschiedlicher Breite und/oder Dicke zu speichern. Dabei wird beim Entnahmevorgang nur der wenigstens eine Greifer der Greifeinrichtung aktiviert, beispielsweise nur der wenigstens eine Saugkopf in seine Wirklage bewegt, der für das Entnehmen der jeweils gewünschten Glassorte erforderlich ist. Dies kann geschehen, ohne dass die restlichen Greifer (die restlichen Saugköpfe) der Greifeinrichtung mit einem oder mehreren daneben stehenden Stapeln anderer Gegenstände (Glassorten) kollidieren.

Beispielsweise bleiben nicht benötigte Greifer der Greifeinrichtung, beispielsweise nicht benötigte Saugköpfe, in ihrer Bereitschaftslage oberhalb der Stapel. Nur die jeweils benötigten Greifer (Saugköpfe) sind in ihre Wirklage bewegt.

Das Bewegen der Greifer aus ihrer Bereitschaftslage in ihre Wirklage und umgekehrt aus ihrer Wirklage in ihre Bereitschaftslage kann durch Verschwenken der Greifer oder durch lineares Bewegen (auf und ab Bewegen) erfolgen. Auch Kombinationen aus Schwenken mit Anheben und Absenken der Greifer sind im Rahmen der Erfindung in Betracht gezogen.

Mit der Erfindung wird auch der Vorteil erreicht, dass auf einem einzigen Lagerbock mehrere, weniger breite Stapel identischer oder unterschiedlicher Glassorten Platz finden können und somit auch bei großer Typenvielfalt an Glassorten Lagerplatz gespart werden kann.

Wenn die erfindungsgemäß vorgesehene Greifeinrichtung als Greifer Saugköpfe aufweist, ist in Betracht gezogen, die Saugköpfe zu wenigstens zwei Gruppen umfassend je wenigstens zwei Saugköpfe zusammenzufassen.

Weitere Einzelheiten und Merkmale der Erfindung ergeben sich aus der nachstehenden Beschreibung von Ausführungsbeispielen anhand der Zeichnungen. Es zeigt:
- Fig. 1: schematisiert eine erfindungsgemäße Vorrichtung (ohne Lagerbock),
- Fig. 2: die Vorrichtung aus Fig. 1 (mit Lagerbock) von der Seite gesehen,
- Fig. 3: eine mit einem Kran kombinierte erfindungsgemäße Vorrichtung und
- Fig. 4: eine Ausführungsform einer Greifeinrichtung mit Greifer in Form von Transportgabeln.

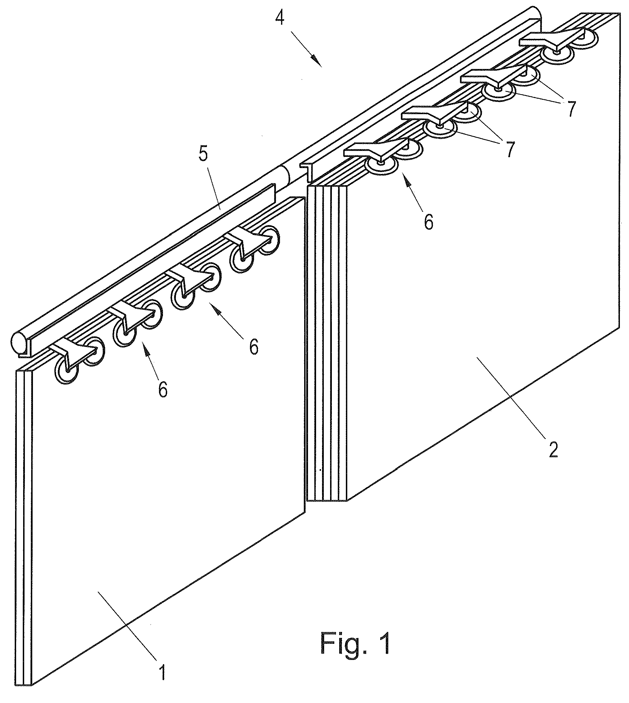

Bei der in Fig. 1 gezeigten Ausführungsform stehen zwei Stapel 1 und 2 (Glaspakete) mit unterschiedlicher Dicke und/oder mit unterschiedlichen Glassorten (z.B. Glas unterschiedlicher Breite) auf einem (in Fig. 1 nicht gezeigten) Lagerbock 3.

Für das Entnehmen von Glasscheiben aus Stapeln 1 und 2 (Glaspaketen) ist eine im Beispiel als Saugerbalken ausgebildete Greifeinrichtung 4 vorgesehen, die an einem Träger 5 verschwenkbar gelagert mehrere Gruppen 6 aus jeweils zwei Greifern, im Beispiel jeweils zwei mit Unterdruck beaufschlagbare Saugköpfe 7, aufweist.

Wenngleich im Ausführungsbeispiel die als Saugköpfe 7 ausgebildeten Greifer der Greifeinrichtung 4 verschwenkbar sind, ist auch eine Ausführungsform der Vorrichtung in Betracht gezogen, bei der die als Saugköpfe 7 ausgebildeten Greifer durch lineares Anheben und Absenken in ihre Bereitschaftslage und aus dieser in ihre Wirklage bewegt werden können. Auch eine Kombination aus linearem Bewegen und Verschwenken der Greifer ist möglich.

In Fig. 1 ist gezeigt, dass vier Gruppen 6 umfassend je zwei Saugköpfe 7, in ihre Wirklage verschwenkt sind (im Beispiel nach unten verschwenkt sind), sodass die Saugköpfe 7 nach Beaufschlagen mit Unterdruck die jeweils vorderste Glasscheibe des Stapels 1 ansaugen, also erfassen, und aus dem Stapel 1 entnehmen können, indem der Träger 5 mit Hilfe eines beliebig ausgebildeten Antriebes bewegt wird.

Fig. 1 zeigt auch, dass die dem in Fig. 1 rechten Stapel 2 zugeordneten Gruppen 6 von Saugköpfen 7 in ihre Bereitschaftslage verschwenkt bleiben, sodass sie oberhalb des Stapels 2 angeordnet sind und die Bewegungen der Greifeinrichtung 4 mit ihren in ihre Wirklage eingeschwenkten Gruppen 6 von Saugköpfen 7 nicht behindern, wie dies in Fig. 2 zu sehen ist.

Bei der Erfindung ist auch vorgesehen, dass die in ihrer Bereitschaftslage befindlichen Saugköpfe 7, also diejenigen Saugköpfe 7, die nicht in ihrer Wirklage eingeschwenkt worden sind, von der Quelle für Unterdruck getrennt sind, also nicht mit Unterdruck beaufschlagt werden.

Lediglich in ihre Wirklage eingeschwenkte Saugköpfe 7 (in Fig. 1 die vier linken Gruppen 6 von Saugköpfen 7) sind, sobald sie an Glasscheiben eines Stapels 1 oder 2 angelegt worden sind, mit Unterdruck beaufschlagt, indem sie mit der Quelle für Unterdruck verbunden sind.

Für das Bewegen des Trägers 5 der Greifeinrichtung 4, um die an ihm vorgesehenen, als Greifer dienenden Saugköpfe 7 über der jeweils vordersten Glasscheibe eines Stapels 1 oder 2 (Glaspaketes) anzuordnen, kann der Träger 5 mit einer Einrichtung zum Verstellen, beispielsweise mit einem Portalkran 10 (vgl. Fig. 3), verbunden sein.

In der in Fig. 3 gezeigten Vorrichtung, die als Portalkran 10 ausgebildet ist, ist eine erfindungsgemäße Greifeinrichtung 4 vorgesehen. Der Portalkran 10 weist einen horizontalen Balken 11 auf und ist über ein zwei Beine 12 umfassendes Fahrgestell 13 über Rollen 14 verfahrbar. So kann die Greifeinrichtung 4 einem Lagerbock 3, auf dem Stapel 1 und 2 mit Glasscheiben stehen, angenähert werden, wenn Glasscheiben auf den Lagerbock 3 unter Bilden von Stapeln 1 oder 2 einzustellen (zu stapeln) oder von einem am Lagerbock 3 stehenden Stapel 1 oder 2 zu entnehmen (abzustapeln) sind.

Am Balken 11 des Portalkranes 10 ist nach mehreren Freiheitsgraden verstellbar eine erfindungsgemäße Greifeinrichtung 4 angeordnet. Beispielsweise ist die Greifeinrichtung 4 über die Aufhängung 15 vertikal (senkrecht zum Balken 11), horizontal (parallel zum Balken 11 und senkrecht zur Laufrichtung des Portalkranes 10) linear bewegbar und um eine lotrechte Achse drehbar.

In Fig. 3 ist beispielhaft gezeigt, dass am Träger 5 der Greifeinrichtung 4 Saugköpfe 7 zu vier jeweils zwei Saugköpfe 7 umfassenden Gruppen 6 zusammengefasst sind. Die Zahl der Gruppen 6 von Saugköpfen 7 ist aber ebensowenig auf vier beschränkt, wie die Zahl der Saugköpfe 7 je Gruppe 6 nicht auf zwei beschränkt ist.

Wie in Fig. 3 durch Linearmotore 16 angedeutet, kann der Abstand zwischen Saugköpfen 7 und der Abstand zwischen Gruppen 6 von Saugköpfen 7 veränderbar sein.

Das Schwenken der Saugköpfe 7 aus ihrer Bereitschaftslage in ihre Wirklage (in Fig. 1 links) und aus ihrer Wirklage in ihre Bereitschaftslage (in Fig. 1 rechts) kann mit Hilfe eines in Fig. 3 gezeigten Hebels 17 mit Antrieb 18 (Linearmotor) erfolgen.

In Fig. 3 ist für den in Fig. 3 linken Teil der Greifeinrichtung 4 gezeigt, dass nicht zwingend alle Saugköpfe 7 oder Gruppen 6 von Saugköpfen 7 gleichzeitig verschwenkt werden. Vielmehr ist in Betracht gezogen, nur die jeweils tatsächlich benötigten Saugköpfe 7 oder Gruppen 6 von Saugköpfen 7 in ihre Wirklage zu schwenken. Es ist somit in Betracht gezogen, nur so viele Saugköpfe 7 oder Gruppen 6 von Saugköpfen 7 in ihre Wirklage zu schwenken, als der Breite der zu handhabenden Glasscheibe entspricht.

Wenn bei einer Ausführungsform der Erfindung vorgesehen ist, dass stets eine vorgegebene Anzahl von Saugköpfen 7 oder von Gruppen 6 von Saugköpfen 7 in ihre Wirklage geschwenkt wird, dann kann vorgesehen sein, dass nicht an einer Glasscheibe angreifende Saugköpfe 7, also Saugköpfe 7, die sich in ihrer Bereitschaftslage befinden, nicht mit der Quelle für Unterdruck verbunden sind, also nicht mit Unterdruck beaufschlagt werden.

Bei der Erfindung ist auch in Betracht gezogen, alle in einem Bereich des Trägers 5, beispielsweise in einer Hälfte, einem Drittel, einem Viertel oder anderen Teilbereich des Trägers 5, angeordneten, als Greifer dienenden Saugköpfe 7 der erfindungsgemäßen Greifeinrichtung 4, oder Gruppen 6 derselben, gemeinsam in ihre und aus ihrer Wirklage zu schwenken. Es ist aber ebenso in Betracht gezogen, nur einzelne Saugköpfe 7 oder Gruppen 6 von Saugköpfen 7 zu benutzen, wenn kleinere (schmälere) Glasscheiben zu handhaben (zu stapeln/entstapeln) sind.

Bei einem Verfahren zum Stapeln und Entstapeln plattenförmiger Gegenstände, wie Glasscheiben, wird so vorgegangen, dass auf einem einzigen Lagerbock wenigstens zwei Stapel gebildet werden, wobei die Stapel voneinander unterschiedlich sind. Dies sind beispielsweise Stapel aus unterschiedlichen Gegenständen (Glassorten), also Gegenständen mit unterschiedlichen Abmessungen (Breite und/oder Länge und/oder Dicke), oder unterschiedlich dicke Stapel, die unabhängig voneinander entstapelt oder gestapelt werden können, indem Gegenstände vom Lagerbock entnommen oder auf den Lagerbock eingestellt werden.

Bei einem Verfahren ist es möglich, Stapel aus voneinander unterschiedlichen plattenförmigen Gegenständen, beispielsweise Gegenstände mit unterschiedlichen Abmessungen (Breite und/oder Länge und/oder Dicke) zu bilden. Beispielsweise werden wenigstens zwei Stapel mit voneinander unterschiedlicher Dicke gebildet, indem wenigstens ein plattenförmiger Gegenstand auf wenigstens einen der Stapel eingestellt wird oder wenigstens ein plattenförmiger Gegenstand aus wenigstens einem der Stapel entnommen wird.

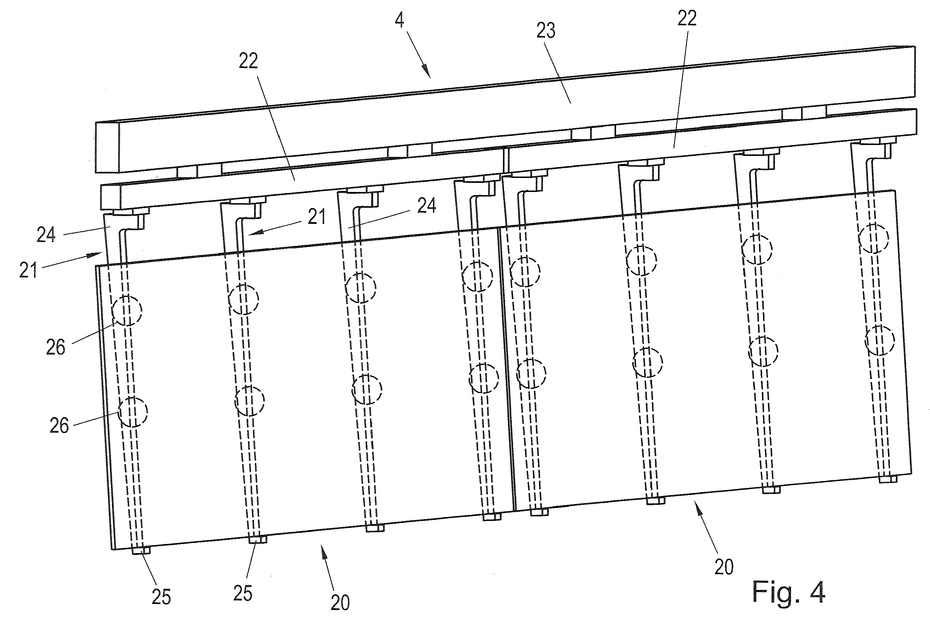

Die in Fig. 4 gezeigte Ausführungsform einer Greifeinrichtung 4 weist an Stelle der Greifer mit Saugköpfen 7 als Greifer zwei Transportgabeln 20 auf. Die Transportgabeln 20 umfassen im gezeigten Ausführungsbeispiel vier L-förmige Tragelemente 21, die an horizontalen Trägern 22, von diesen nach unten ragend angebracht sind. Die Träger 22 sind abnehmbar an einem Hauptträger 23 angeordnet.

Die im Beispiel zwei Gruppen aus je vier Tragelementen 21 aufweisenden Transportgabeln 20 können, nachdem sie vom Hauptträger 23 abgenommen worden sind, für die neue Verwendung in Lagerbehältern bereitgehalten werden. Während eine Transportgabel 20 abgenommen ist, kann mit der anderen, am Hauptträger 23 verbliebenen Transportgabel 20 gestapelt/entstapelt werden.

Die Tragelemente 21 weisen jeweils einen längeren im Wesentlichen lotrechten Schenkel 24 und einen kürzeren im Wesentlichen horizontalen Schenkel 25 auf. Die horizontalen Schenkel 25 stützen von der Greifeinrichtung 4 erfasste, zu transportierende Gegenstände von unten ab. Die Gegenstände lehnen dabei an den lotrechten Schenkeln 24 der Tragelemente 21. Um Gegenstände sicher an den Transportgabeln 20 zu halten, können die Tragelemente 21 an ihren lotrechten Schenkeln 24 mit Saugköpfen 26 bestückt sein.

Die längeren, im wesentlichen lotrechten Schenkel 24 der Tragelemente 21 können längenveränderbar, z. B. teleskopierbar, ausgebildet sein.

Die Transportgabeln 20 oder wenigstens deren Tragelemente 21 sind, so wie dies weiter oben für die Ausführungsform mit Saugköpfen 7 beschrieben worden ist, aus ihrer in Fig. 4 gezeigten Wirklage ausschwenkbar und aus ihrer Bereitschaftslage wieder in die Wirklage zurückschwenkbar. Wenn eine der Transportgabeln 20 aus ihrer Wirklage ausgeschwenkt worden ist, können Gegenstände aus nebeneinander stehenden Stapeln aus plattenförmigen Gegenständen entnommen (abgestapelt) und in solche Stapel abgestellt (aufgestapelt) werden, auch wenn die Stapel unterschiedlich dick sind. Diese Arbeitsweise ist auch möglich, wenn eine Transportgabel 20, umfassend eine Gruppe von Tragelementen 21, vom Hauptträger 23 angenommen worden ist.

Im Übrigen kann die in Fig. 4 gezeigte Ausführungsform einer Greifeinrichtung 4 so benützt werden wie dies weiter oben für die in den Fig. 1 -3 gezeigte Ausführungsform erläutert worden ist. Zusätzlich ergibt sich der Vorteil einer größeren Bewegungsfreiheit und gegebenenfalls verkürzter Wege, da die Transportgabeln 20 vom Hauptträger 23 abgenommen werden können und der Hauptträger 23 über in einem Lager stehende Stapel und/oder Lagerböcke u. dgl. bewegt werden kann.

Im Rahmen der Erfindung ist eine Ausführungsform in Betracht gezogen bei der eine Greifeinrichtung 4 der in den Fig. 1 - 3 gezeigten Ausführungsform mit einer Greifeinrichtung 4 der Ausführungsform von Fig. 4 kombiniert ist.

Bei einer solchen Kombinierten Greifeinrichtung kann vorgesehen sein, dass Saugköpfe 7 und Transportgabeln 20 voneinander unabhängig zwischen der jeweiligen Bereitschaftslage und Wirklage verschwenkbar sind.

Ein Verfahren kann vorteilhaft mit Hilfe einer Vorrichtung gemäß der Erfindung ausgeführt werden. Zusammenfassend kann ein Ausführungsbeispiel der Erfindung wie folgt beschrieben werden:

Beim Handhaben plattenförmiger Gegenstände, wie Glasscheiben, um diese aus Stapeln 1, 2, in denen die Gegenstände zur Vertikalen geneigt stehen, zu entnehmen oder auf Stapel 1, 2 einzustellen, wird eine Greifeinrichtung 4 verwendet, die es erlaubt, auf einem Lagerbock wenigstens zwei Stapel 1, 2 aus Gegenständen zu bilden, wobei die Stapel 1, 2 voneinander unterschiedlich sind. Die Greifeinrichtung 4 weist wenigstens zwei von einander unabhängige Greifer auf. Als Greifer der Greifeinrichtung 4 sind Saugköpfe 7 vorgesehen, die voneinander unabhängig in ihre und aus ihrer Gegenständen zugeordneten Wirklage schwenkbar sind. Dabei sind aus ihrer Wirklage verschwenkte Saugköpfe 7 der Greifeinrichtung 4 oberhalb von Stapeln 1, 2 angeordnet.

## Patentansprüche

1. Vorrichtung zum Stapeln und Entstapeln plattenförmiger Gegenstände, wie Glasscheiben, bei dem auf einem Lagerbock nebeneinander wenigstens zwei unterschiedliche Stapel (1, 2), in denen die Gegenstände insbesondere zur Vertikalen geneigt stehen, durch Einstellen plattenförmiger Gegenstände gestapelt und durch Entnehmen plattenförmiger Gegenstände abgestapelt werden, mit einer Greifeinrichtung (4) zum Erfassen der Gegenstände, wobei die Greifeinrichtung (4) wenigstens zwei Greifer umfasst, **dadurch gekennzeichnet, dass** die Greifeinrichtung (4) nebeneinander wenigstens zwei Gruppen (6) mit je wenigstens einem Greifer, insbesondere je wenigstens zwei Greifern, aufweist, dass die Greifer der Greifeinrichtung (4) durch Schwenkbewegungen oder lineare Bewegungen, insbesondere Heben/Senken, voneinander unabhängig in ihre und aus ihrer Gegenständen zugeordneten Wirklage verstellbar sind und dass aus ihrer Wirklage verstellte Greifer der Greifeinrichtung (4) oberhalb von Stapeln (1, 2) angeordnet sind.

2. Vorrichtung nach Anspruch 1, **dadurch gekennzeichnet, dass** als Greifer der Greifeinrichtung (4) Saugköpfe (7), denen eine Quelle für Unterdruck zugeordnet ist, vorgesehen sind.

3. Vorrichtung nach einem der Ansprüche 1 oder 2, **dadurch gekennzeichnet, dass** als Greifer für die Greifeinrichtung (4) Transportgabeln (20) vorgesehen sind.

4. Vorrichtung nach Anspruch 3, **dadurch gekennzeichnet, dass** jede Transportgabel (20) wenigstens zwei im wesentlichen L-förmige Tragelemente (21) aufweist.

5. Vorrichtung nach Anspruch 3 oder 4, **dadurch gekennzeichnet, dass** an den Transportgabeln (21), insbesondere deren im Wesentlichen lotrechten Schenkeln (24) Saugköpfe (26) vorgesehen sind.

6. Vorrichtung nach Anspruch 4 oder 5, **dadurch gekennzeichnet, dass** die Tragelemente (21) der Transportgabeln (20) an Trägern (22), vorzugsweise von diesen nach unten abstehend, angeordnet sind.

7. Vorrichtung nach einem der Ansprüche 3 bis 6, **dadurch gekennzeichnet, dass** die Transportgabeln (20) lösbar an einem Hauptträger (23) befestigt sind.

8. Vorrichtung nach einem der Ansprüche 1 bis 7, **dadurch gekennzeichnet, dass** Greifer mit Saugköpfen (7) gemäß Anspruch 2 mit Greifern mit Transportgabeln (20) gemäß einem der Ansprüche 3 bis 7 kombiniert sind.

9. Vorrichtung nach Anspruch 8, **dadurch gekennzeichnet, dass** Saugköpfe (7) und Transportgabeln (20) voneinander unabhängig in ihre und aus ihrer jeweiligen Wirklage verschwenkbar sind.

## Claims

1. Device for the stacking and de-stacking of panel-shaped items, such as glass panels, in which on a bearing platform at least two different stacks (1, 2), side-by-side, in which the items in particular stand inclined to the vertical, are stacked by placement of panel-shaped items, and are de-stacked by the removal of panel-shaped items, with a gripping device (4) for capturing the items, wherein the gripping device (4) comprises at least two grippers, **characterised in that** the gripping device (4) has at least two sections (6) side-by-side, each with at least one gripper, in particular each with at least two grippers, **in that** the grippers of the gripping device (4) can be moved by swivelling movements or linear movements, in particular raising/lowering, independently of one another into and out of their operative positions associated with items, and **in that** grippers of the gripping device (4) moved out of their operating positions are arranged above stacks (1, 2).

2. Device in accordance with claim 1, **characterised in that** suction heads (7) are provided as grippers of the gripping device (4) to which a source of reduced pressure is associated.

3. Device in accordance with claim 1 or 2, **characterised in that** transport forks (20) are provided as grippers for the gripping device (4).

4. Device in accordance with claim 3, **characterised in that** each transport fork (20) has at least two essentially L-shaped load-bearing elements (21).

5. Device in accordance with claim 3 or 4, **characterised in that** suction heads (26) are provided on the transport forks (21), in particular on their essentially vertical arms (24).

6. Device in accordance with claim 4 or 5, **characterised in that** the load-bearing elements (21) of the transport forks (20) are arranged on beams (22), preferably protruding downwards from the latter.

7. Device in accordance with one of claims 3 to 6, **characterised in that** the transport forks (20) are detachably mounted on a main beam (23).

8. Device in accordance with one of claims 1 to 7, **characterised in that** the grippers with suction heads (7) according claim 2 are combined with grippers with transport forks according to one of claims 3 to 7.

9. Device in accordance with claim 8, **characterised in that** suction heads (7) and transport forks (20) can be swivelled independently of one another into and out of their respective operative position.

## Revendications

1. Dispositif destiné à empiler et désempiler des objets en forme de plaques, tels que des vitres en verre, sur lequel sur un support d'appui, on empile par pose d'objets en formes de plaques et on désempile par retrait d'objets en forme de plaques au moins deux différentes piles (1, 2) dans lesquelles les objets sont placés notamment en étant inclinés par rapport à la verticale, avec un système de préhension (4) pour saisir les objets, le système de préhension (4) comprenant au moins deux grappins, **caractérisé en ce que** le système de préhension (4) comporte côte à côte au moins deux groupes (6) avec chacun au moins un grappin, notamment chacun au moins deux grappins, **en ce que** par des mouvements de pivotement ou des mouvements linéaires, notamment relevage/abaissement, les grappins du système de préhension (4) sont déplaçables indépendamment l'un de l'autre dans leur et hors de leur position primitive associée à des objets et **en ce que** des grappins du système de préhension (4) déplacés hors de leur position primitive sont placés au-dessus de piles (1, 2).

2. Dispositif selon la revendication 1, **caractérisé en ce qu'**en tant que grappins du système de préhension (4) sont prévues des têtes aspirantes (7) auxquelles est associée une source de dépression.

3. Dispositif selon l'une quelconque des revendications 1 ou 2, **caractérisé en ce qu'**en tant que grappins pour le système de préhension (4) sont prévues des fourches de transport (20).

4. Dispositif selon la revendication 3, caractérisé en e que chaque fourche de transport (20) comporte au moins deux éléments porteurs (21) sensiblement en forme de L.

5. Dispositif selon la revendication 3 ou la revendication 4, **caractérisé en ce que** sur les fourches de transport (21), notamment sur leurs branches (24) sensiblement d'aplomb sont prévues des têtes aspirantes (26).

6. Dispositif selon la revendication 4 ou la revendication 5, **caractérisé en ce que** les éléments porteurs (21) des fourches de transport (20) sont placés sur des supports (22), de préférence en débordant de ces derniers vers le bas.

7. Dispositif selon l'une quelconque des revendications 3 à 6, **caractérisé en ce que** les fourches de transport (20) sont fixées de manière amovible sur un support principal (23).

8. Dispositif selon l'une quelconque des revendications 1 à 7, **caractérisé en ce que** des grappins avec des têtes aspirantes (7) selon la revendication 2 sont associés avec des fourches de transport (20) selon l'une quelconque des revendications 3 à 7.

9. Dispositif selon la revendication 8, **caractérisé en ce que** des têtes aspirantes (7) et des fourches de transport (20) sont susceptibles de pivoter indépendamment les unes des autres dans leur ou hors de leur position primitive.
